# EUROPEAN PATENT APPLICATION

(11) **EP 2 113 345 A1**
(43) Date of publication of application: **04.11.2009**
(21) Application number: 07792481.9
(22) Date of filing: 14.08.2007
(51) Int. Cl.: B25J 15/08

(54) **ROBOT HAND OF INDUSTRIAL ROBOT**

(30) Priority: 16.02.2007 JP 2007035834
(71) Applicant: Takano Bearing Co., Ltd., Tokyo 143-0023 (JP)
(72) Inventor: TAKANO, Kiichiro c/o Takano Bearing Co., Ltd., Tokyo, 1430023 (JP)
(74) Representative: Knoop, Philipp
(86) International application number: PCT/JP2007/065838
(87) International publication number: WO 2008/099525

(57) **Abstract**

**(Problem)** A pair of finger bodies should be able to easily sandwich a workpiece without being interfered by other adjacent workpieces, and should be able to easily and rapidly change a standby open clearance depending on an external diameter of multiple workpieces in various sizes.

**(Means for solving the problem)** A pair of hand piston 8 and 10 connected by a connection rod 12 is inserted in a hand cylinder 2, and an opening 14 and 15 are formed in the hand cylinder 2. A driving rack gear 11 is formed on the connection rod 12, and engages with a driving pinion gear 20 arranged on a penetrating axis 16 rotatably arranged in the hand cylinder 2 to penetrate the hand cylinder 2. The robot hand for an industrial robot has a rack and pinion mechanism 1 enabling a pair of finger body 27 and 28 to slide in an axial direction of the hand cylinder 2 with a driven pinion gear 21 on the external periphery of the lower end of the penetrating axis 16 engaging with a driven rack gear 30 and 31 of the pair of finger body 27 and 28, a stopper mechanism 35 controlling a position at which the finger body 27 stops, and a sensor mechanism 55 having multiple sensors 58 arranged facing an inner portion of a widthwise moving direction of the finger body 27 and 28 to be able to detect the finger body 27.

## Description

### Field of the Invention

This invention relates to a robot hand for industrial robots capable of easily gripping a targeted workpiece among multiple workpieces in various sizes without being interfered by other workpieces at production steps and the like.

### Background of the Invention

A conventionally known robot hand for industrial robots sandwiches and picks up a targeted workpiece from multiple workpieces in various sizes at production steps and the like. There are various mechanisms for such robot hands, but a generally used robot hand has a pair of finger bodies gripping a workpiece by changing the griping clearance thereof.

To grip a workpiece with the above-mentioned robot hand having the pair of finger bodies, the pair of finger bodies move in directions away from each other to arrange the pair of finger bodies at a maximum open position forming the widest open clearance to form a maximum open clearance. Then, the finger bodies move to position the targeted workpiece between the pair of finger bodies forming the maximum open clearance. Then, the finger bodies slide from the maximum open position to a position at which the pair of finger bodies comes in contact with both sides of the workpiece to grip the targeted workpiece.

As described above, the finger bodies of the conventional robot hand form the maximum open clearance until just before starting to slide inwardly. Accordingly, where the robot hand is to grip a workpiece having an external diameter greatly smaller than the maximum open clearance formed by the pair of finger bodies, the finger bodies are likely to come in contact with other workpieces around the targeted workpiece among multiple workpieces randomly placed on a work table when the finger bodies come close to the targeted workpiece to position the targeted workpiece between the pair of finger bodies, because the finger bodies have the maximum open clearance greatly wider than the external diameter of the targeted workpiece. Thus, there raises a disadvantage that it is difficult for the finger bodies to grip the workpiece.

In addition, where the finger bodies move to position a workpiece within the maximum open clearance, a wide clearance is formed between the finger bodies and the workpiece. Thus, it takes much time for the finger bodies to slide inwardly to come in contact with both sides of the workpiece, thus deteriorating the workability of holding the workpiece with the finger bodies.

In order to avoid such disadvantage as mentioned above, multiple finger bodies are previously prepared that can form the maximum open clearances slightly wider than the external diameters of workpieces, and the finger bodies capable of forming the maximum open clearance appropriate for the external diameter of the targeted workpiece are replaced on the robot hand main body every time the external diameter of the workpiece changes. Accordingly, the number of parts for replacing the finger bodies increases, and replacement work takes time and is troublesome to deteriorate the workability.

As Patent Reference 1 discloses, a robot hand is conventionally known that can form a standby open clearance slightly wider than the external diameter of a workpiece in addition to the maximum open clearance and can adjust the standby open clearance of the finger bodies depending on the external diameter of the targeted workpiece. Patent Reference 1 : Japanese Un-examined Patent Application Publication No. H5-177576
The invention disclosed in Patent Reference 1 has a pair of finger bodies pivotally movable about an axis, a clamp cylinder connected to the pair of the finger bodies, and a standby cylinder adjacent to the clamp cylinder. The standby cylinder has an adjustment means capable of adjusting a slide amount of a piston rod at the tip of the standby cylinder, and the standby open clearance of the pair of finger bodies can be adjusted to a desired amount by adjusting the adjustment means and varying the slide amount of the piston rod.

Thus, the standby open clearance slightly wider than the external diameter of the workpiece to be gripped can be formed by adjusting the adjustment means. Accordingly, the pair of finger bodies can be placed at both sides of the targeted workpiece among multiple workpieces in various sizes without coming in contact with other workpieces, thus being capable of easily griping the targeted workpiece.

In addition, where the finger bodies move to position the targeted workpiece within the standby open clearance of the pair of the finger bodies, the external diameter of the targeted workpiece approximates to the maximum open clearance. Thus, the invention in Patent Reference 1 can shorten a time to inwardly slide the finger bodies to render the finger bodies in contact with both sides of the workpiece.

### Brief Summary of the Invention

### Problems to be solved by the Invention

The robot hand disclosed in Patent Reference 1, however, can only form a constant standby open clearance previously adjusted by the adjustment means. That is, where the maximum open clearance of the pair of the finger bodies is changed to another standby open clearance, the adjustment means must be adjusted on every such occasion. Accordingly, where the robot hand is to consecutively grip multiple workpieces in various external diameters, the robot hand must have the adjustment means perform adjustment depending on the external diameter of each workpiece to change the standby open clearance of the finger bodies every time gripping the workpiece in a different external diameter, thus such work takes time and is troublesome to deteriorate the workability.

This invention is made to solve the problem as described above, and where multiple workpieces in various sizes exist, the robot hand of the present invention can easily have a pair of finger bodies form, in addition to the maximum open clearance, the standby open clearance slightly wider than the external diameter of each workpiece, and can rapidly consecutively form the standby open clearance varying depending on each of various external diameters of the multiple work pieces, thus improving the workability when consecutively or randomly transporting workpieces in various sizes.

### Means for Solving the Problem

In order to solve the problem as described above, the robot hand of the present invention has a rack and pinion mechanism, a stopper mechanism, and a sensor mechanism. The rack and pinion mechanism has a pair of hand pistons, connected by a connection rod, slidably inserted in a hand cylinder, and also has openings for a pressurized gas on the outside of the hand cylinder at the axially end portions of the pair of the hand piston.

Furthermore, a driving rack gear is formed on the connection rod, and the driving rack gear engages with a driving pinion gear arranged on a penetrating axis, which is rotatably arranged in the hand cylinder to penetrate the hand cylinder. Both ends of the penetrating axis protrude from the hand cylinder, and a driven pinion gear is formed on the external periphery of the lower end of the penetrating axis. The driven pinion gear engages with a pair of driven rack gears formed on the pair of finger bodies, so that the pair of finger bodies can slide in an axial direction of the hand cylinder. The stopper mechanism can engage with the penetrating axis protruding upward from the hand cylinder to control a position at which the finger bodies stop. The stopper mechanism may have a stopper gear secured to the upper end of the penetrating axis of the rack and pinion mechanism and a stopper body arranged reciprocally movably facing the stopper gear to be able to engage with the stopper gear so that the reciprocal movement of the stopper body may be controlled by a detection signal of one of the multiple sensors. The sensor mechanism has multiple sensors spaced apart prescribed intervals, and the multiple sensors face an inner portion of a widthwise moving direction of the finger bodies of the rack and pinion mechanism to be able to detect a position of one of the finger bodies. The multiple sensors may be detachably and movably secured to an elongated hole, formed parallel to the moving direction of the finger bodies, on a sensor plate arranged on the hand cylinder.

With the robot hand for an industrial robot as structured above, one of the multiple sensors of the sensor mechanism is first rendered in a state ready for detection, the one being capable of determining that a clearance between the pair of the finger bodies is narrower than a maximum open clearance of the pair of the finger bodies and wider than an external diameter of the workpiece to be gripped. It is to be noted that one of the multiple sensors may be rendered in the state ready for detection in advance depending on the workpiece to be gripped.

Then, with the one of the multiple sensors being in the state ready for detection, the finger bodies slide inwardly to come close to the one of the multiple sensors ready for detection. The one of the multiple sensors detects the finger bodies, and activates a control device of the stopper mechanism to stop the pair of the finger bodies, thereby forming a standby open clearance between the pair of the finger bodies. The robot hand moves with the formed standby open clearance, and positions the external diameter of the workpiece to be gripped between the standby open clearance of the pair of the finger bodies. Then, the stopper mechanism is released to release the stopped finger bodies, thereby having the finger bodies slide inwardly to narrow the standby open clearance to come in contact with both sides of the workpiece, and thus, the workpiece can be gripped.

### Advantage of the Invention

This invention is structured as described above, and accordingly, by rendering one of the multiple sensors in a state ready for detection, the pair of finger bodies can be easily stopped at the one of the multiple sensors ready for detection. Thus, by rendering in a state ready for detection one of the multiple sensors capable of determining a clearance of the pair of finger bodies slightly wider than the external diameter of the workpiece to be griped, the standby open clearance slightly wider than the external diameter of the workpiece to be gripped can be formed. Therefore, by changing one of the sensors to be rendered in a state ready for detection to adjust a position at which the finger bodies stop whenever necessary, the width of the standby open clearance of the finger bodies can be easily and rapidly changed.

Therefore, where there are multiple workpieces in various sizes, the robot hand of the present invention can easily form the standby open clearance slightly wider than the external diameter of each workpiece, and can rapidly consecutively form the standby open clearance varying depending on various external diameters of the multiple work pieces, thus improving the workability when consecutively or randomly transporting workpieces in various sizes.

### Brief Description of the Drawings

Fig. 1 is a front view of a robot hand according to the embodiments of the present invention.
Fig. 2 is a cross sectional view showing a rack and pinion mechanism and a stopper mechanism of the first embodiment of this invention.

Fig. 3 is a cross sectional view along A-A line in Fig. 2.
Fig. 4 is a conceptual diagram showing a connection between a hand cylinder and a hand solenoid valve and between a stopper cylinder and a stopper solenoid valve.
Fig. 5 is a bottom view of the robot hand according to the first embodiment.
Fig. 6 is a conceptual diagram showing operation of finger bodies and a second sensor.
Fig. 7 is a conceptual diagram showing operation of the finger bodies and a first sensor.
Fig. 8 is a conceptual diagram showing operation of the finger bodies and a third sensor.

### Explanation of Reference Numerals

- 1: Rack and pinion mechanism
- 2: Hand cylinder
- 8, 10: Hand piston
- 11: Driven rack gear
- 12: Connecting rod
- 14,15: Air opening
- 16: Penetrating axis
- 20: Driving pinion gear
- 21: Driven pinion gear
- 27,28: Finger body
- 30,31: Driven rack gear
- 35: Stopper mechanism
- 41: Stopper gear
- 42: Stopper cylinder
- 49: Stopper body
- 55: Sensor mechanism
- 58: Sensor
- 62: Detection object
- 67: Workpiece

### First Embodiment

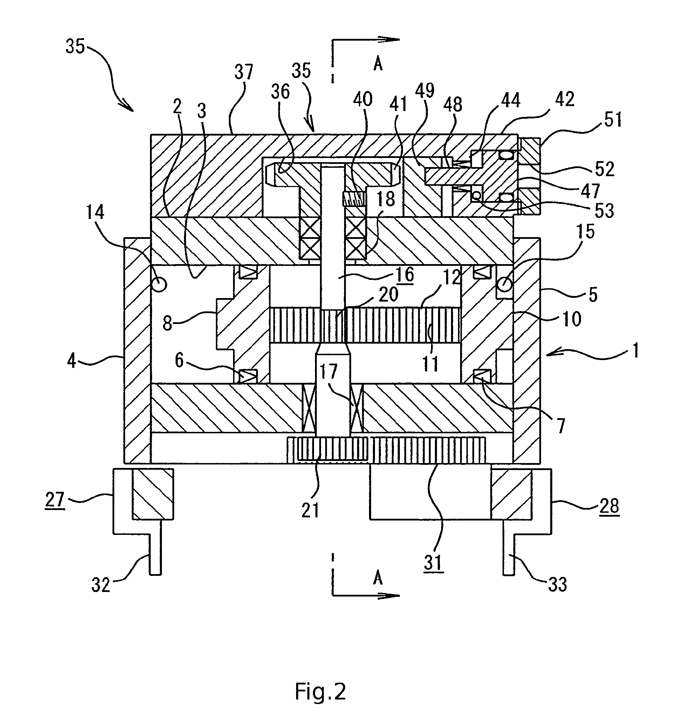

The first embodiment of the present invention is described with reference to the figures. A rack and pinion mechanism (1) of the present embodiment is hereinafter described in detail. As shown in Fig. 2, a column shaped hand cylinder chamber (3) is formed in a hand cylinder (2) and penetrates the hand cylinder (2) with both ends of the hand cylinder chamber (3) being sealed by a pair of sealing wall (4), (5), and a pair of hand pistons (8), (10) having gaskets (6), (7) secured to the external periphery thereof is arranged in the hand cylinder chamber (3) in a manner that the pair of hand pistons (8), (10) are slidably inserted into the hand cylinder chamber (3).

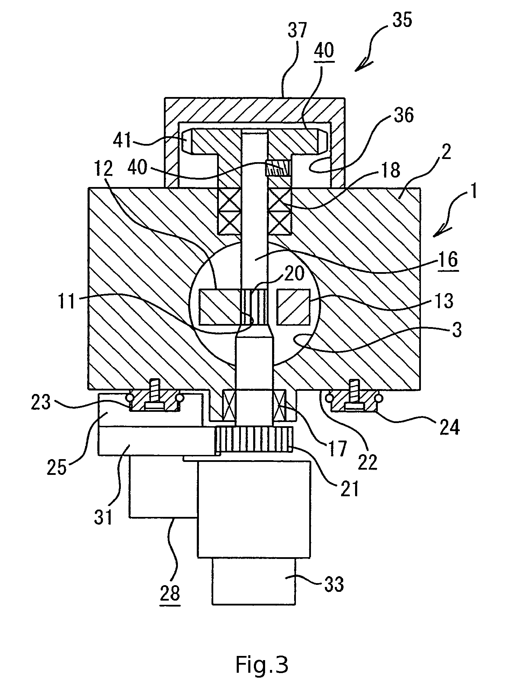

The pair of hand pistons (8), (10) is connected by a connection rod (12) having a driving rack gear (11) formed thereon and by a pillar (13) arranged parallel to the connection rod (12) at a constant insertion clearance from the connection rod (12) as shown in Fig. 3. As shown in Fig. 2, a first opening (14) and a second opening (15) are arranged on the outside of the hand cylinder (2) at axially end portions of the hand pistons (8), (10) for introducing and discharging a pressurized gas. The pressurized gas is introduced to and discharged from the hand cylinder (2) via the first opening (14) and the second opening (15), and pushing force of the pressurized gas enables the hand pistons (8), (10) to slide reciprocally in the axial direction of the hand cylinder (2).

As shown in Fig. 3, a column shaped penetrating axis (16) penetrates the hand cylinder (2) in a direction perpendicular to the axial direction of the hand cylinder (2) at the center of the hand cylinder (2) in the longitudinal direction thereof between the insertion clearance of the pillar (13) and the connection rod (12), and is arranged to have the top end and the bottom end of the penetrating axis (16) protrude externally from the hand cylinder (2). As shown in Fig. 2, the penetrating axis (16) is rotatably supported by the hand cylinder with bearings (17), (18). On the external periphery of the penetrating axis (16), a driving pinion gear (20) is formed opposite to the driving rack gear (11) to be able to engage with the driving rack gear (11).

A driven pinion gear (21) is arranged on the external periphery of the lower end of the penetrating axis (16) formed protruding from the hand cylinder (2) as described above. As shown in Fig. 3, a pair of rail guides (23), (24) is continuously arranged in the longitudinal direction of the hand cylinder (2) on both sides of the bottom (22) of the hand cylinder (2).

Liner guides (25), (26) capable of converting a sliding guide face into a roller guide face are slidably arranged along the guides (24), (25). A pair of driven rack gears (30), (31) is respectively secured to the bottom of the liner guides (24), (25) to engaged with the driven pinion gear (21) arranged on the lower end of the penetrating axis (16). An L-shaped finger bodies (27), (28) are respectively secured to the bottom of the driven rack gear (31). Thus, the pair of finger bodies (27), (28) can slide in the axial direction of the hand cylinder (2) to narrow and widen a sandwiching clearance via the linear guides (25), (26) and the driven rack gear (31).

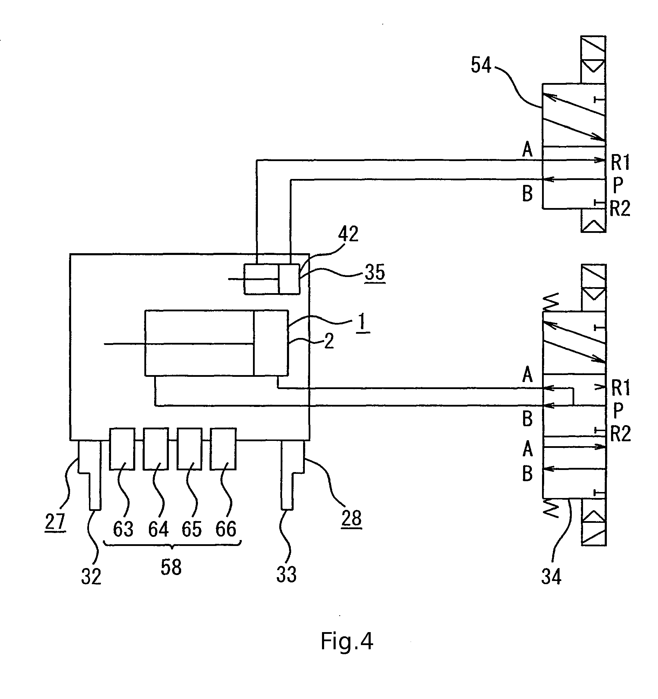

As shown in Fig. 2, plate-shaped chucks (32), (33) are respectively formed and arranged in a vertical direction below the pair of finger bodies (27), (28). The introduction and discharge of the pressurized gas via the first opening (14) and the second opening (15) of the hand cylinder (2) is controlled by a 5-port 3-position pressure-center hand solenoid valve (34) as shown in Fig. 4.

A stopper mechanism (35) of the present embodiment is hereinafter described in detail. As shown in Fig. 2, a casing (37) is arranged above the hand cylinder (2) of the rack and pinion mechanism (1). In the casing (37), a cavity (36) is formed in the center, and a stopper cylinder (42) is formed separated from the cavity (36) by a partition (44). The cavity (36) accommodates the upper end of the penetrating axis (16) protruding from the hand cylinder (2), and a stopper gear (41) is secured by a screw (40) on the protruding portion of the penetrating axis (16).

In the cavity (36), a stopper body (49) in a wedge shape is arranged facing the stopper gear (41) to be able to control the rotation of the penetrating axis (16). The stopper body (49) is connected to a stopper piston (47) via a protruding rod (48). The stopper piston (47) is slidably arranged in the stopper cylinder (42).

A connection material (51) is placed on the stopper cylinder (42), and a second stopper opening (52) enabling the introduction and discharge of the pressurized gas is arranged on the connection material (51). A first stopper opening (53) is arranged between the stopper piston (47) and the partition (44). As shown in Fig. 4, the introduction and discharge of the pressurized gas to and from the stopper cylinder (42) is controlled by a 5-port 2-position stopper solenoid valve (54). The stopper mechanism (35) has a control device, not shown, capable of controlling the stopper gear (41).

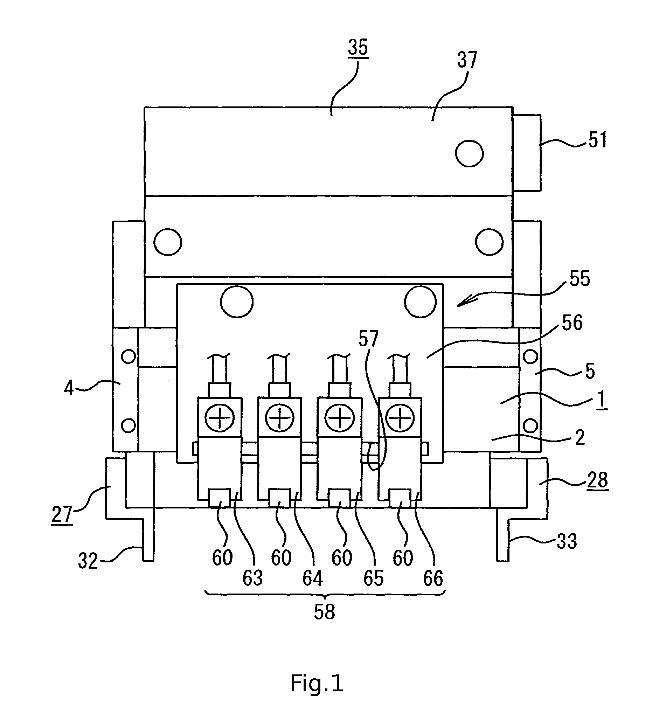

A sensor mechanism (55) of the present embodiment is hereinafter described in detail. As shown in Fig. 1, a plate-shaped sensor plate (56) is secured to the front of the hand cylinder (2) of the rack and pinion mechanism (1). An elongated hole (57) is continuously formed from one end to the other end of the sensor plate (5) in a direction parallel to a moving direction of finger body (27), (28).

Four pieces of sensors (58) spaced apart from each other are arranged in series on the sensor plate (56) to face the inner portion of a widthwise moving direction of the finger bodies (27), (28). The sensors (58) have engaging projections, not shown, on the back surfaces thereof to be able to engage width the elongated hole (57) of the sensor plate (56).

Each of the sensors (58) has its engaging projection engage with the elongated hole (57) of the sensor plate (56) to be movably secured to and detachably from the sensor plate (56). Thus, the sensors (58) can be attached to arbitrary positions of the elongated hole (57), and the sensors (58) once attached to the sensor plate (56) can also be moved to other positions.

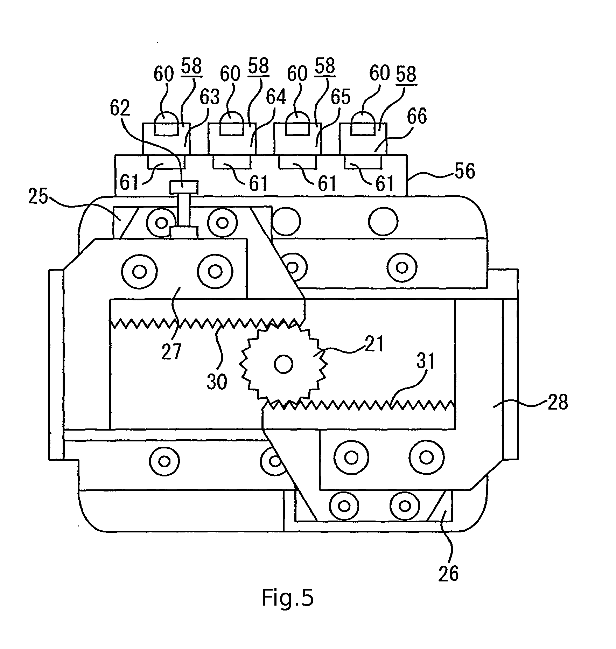

Each of the sensors (58) is substantially rectangular parallelepiped, and has a detection lamp (60), arranged on the lower end of the front surface thereof, that illuminates to inform operators that the sensor is ready to perform detection, and each of the sensors (58) further has a detection body (61) on the back surface thereof. As shown in Fig. 5, a detection object (62) that can be detected by the detection body (61) is arranged on the finger body (27), such that the detection body (61) can detect the position of the finger body (27). It should be noted that only the detection body (61) of the sensor (58) being in a state ready for detection can detect the detection object (62), that is, the detection body (61) of the sensor (58) not in a state ready for detection cannot detect the detection object (62) even if the detection object (62) comes close to the detection body (58).

Operation steps of the robot hand as structured above is hereinafter described in detail. In the present embodiment, four pieces of the sensor (58) are attached on the sensor plate (56). For the sake of convenience, the four pieces of the sensors (58) are respectively referred to as a first sensor (63), a second sensor (64), a third sensor (65), and a fourth sensor (66) from left to right in Fig. 1. Steps for engaging the first to forth sensors (63), (64), (65), and (66) with the elongated hole (57) are hereinafter described.

The first sensor (63) is first described herein. An operator confirms the maximum open position of the finger body (27) having the detection object (62), and the first sensor (63) is made to engage with the elongated hole (57) of the sensor plate (56) at a position facing this maximum open position. Thus, for example, where the finger bodies (27), (28) slide to the maximum open position with the first sensor (63) being in a state ready for detection, the first sensor (63) detects the detection object (62) of the finger body (27) at the maximum open position.

Subsequently, the fourth sensor (66) is described hereinafter. The operator confirms a closed end position at which the pair of finger bodies (27), (28) is closest to each other upon sliding inwardly, and the forth sensor (66) is made to engage with the elongated hole (57) of the sensor plate (56) at a position facing this closed end position. Thus, for example, where the finger body (27) slides to the closed end position with the fourth sensor being in a state ready for detection, the fourth sensor (66) detects the detection object (62) of the finger body (27) at the closed end position.

Furthermore, after the first sensor (63) and the fourth sensor (66) among the four pieces of the sensors (58) are engaged with the sensor plate (56), the remaining two pieces, namely, the second sensor (64) and the third sensor (65), are arranged on the sensor plate (56). The external diameters of the multiple work pieces (67) are previously measured, and the operator confirms a position at which the chucks (32), (33) of the finger bodies (27), (28) form the standby open clearance slightly wider than the external diameter of the workpiece (67) to be gripped. As described above, there are two pieces of the sensors remaining, and thus, two positions forming the standby open clearances can be configured. The second sensor (64) and the third sensor (65) are arranged spaced apart from each other between the first sensor (63) and the fourth sensor (66) to face the two positions forming the standby open clearances.

In addition to the two positions forming the standby open clearances, a position forming the maximum open clearance can also be used as the position forming the standby open clearance, where the external diameter of the work piece (67) is wide. Furthermore, in the present embedment, there are four pieces of the sensors (58) arranged on the sensor plate (56), but in other embodiments, five or more pieces of the sensors (58) may be arranged, or alternatively, the number of the sensors (58) can be three or two pieces.

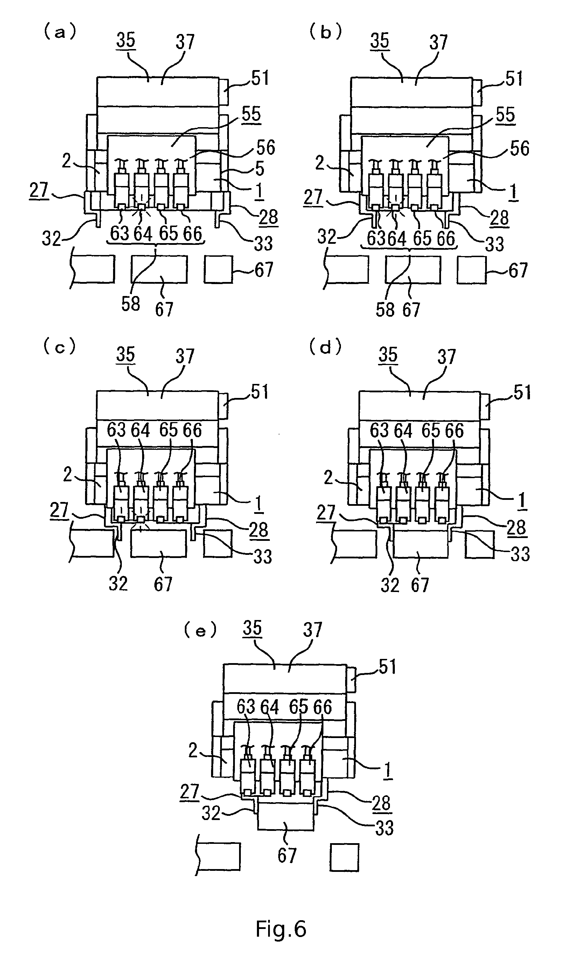

As described above, with the four pieces of the sensors (58) arranged on the sensor plate (56), if the second sensor (64) is in a state ready to detect the finger body being at the position forming the standby open clearance slightly wider than the external diameter of the workpiece (67) to be gripped, the detection lamp (60) of the second sensor (64) illuminates as shown in Fig. 6(b).

As shown in Fig. 2 and Fig. 6(a), the pair of the finger bodies (27), (28) are previously arranged at the maximum open position, and the stopper gear (41) and the stopper body (49) of the stopper mechanism (35) are made not engage with each other. In such state, the hand solenoid valve (34) is switched to introduce the pressurized gas via the first opening (15) on a side of the sealing wall (5) in contact with the hand piston (10) and discharge the pressurized gas existing between the hand piston (8) and the sealing wall (4) via the second opening (14). Thus, the pair of the hand pistons (8), (10) slides in a direction of pressure of the pressurized gas to cause the connection rod (12) to slide in the same direction as the movement of the hand pistons (8), (10), and thereby, the driving rack gear (11) makes the penetrating axis (16) rotate in a clockwise direction with the driving pinion gear (20) to cause the driven pinion gear (21) to rotate in the same direction as the rotation of the penetrating axis (16). The rotation of the driven pinion gear (21) makes each of the pair of the driven rack gears (30), (31) move inwardly to cause each of the pair of the finger bodies (27), (28) having the driven rack gears (30), (31) arranged thereon to move inwardly along the guides (23), (24).

When the pair of the finger bodies (27), (28) slides, the rolling-element endless circulation linear guides (25), (26) connected to the pair of the finger bodies (27), (28) prevents galling, micro slip, and the like, thus enabling the finger bodies (27), (28) to smoothly slide. As the finger bodies (27), (28) slide inwardly, the detection object (62) on the finger body (27) moves inwardly. When the detection object (62) of the finger body (27) comes close to the second sensor (64), the detection body (61) on the second sensor (64) detects the detection object (62) and transmits a signal to the control device of the stopper mechanism (35). Thus, the stopper solenoid valve (54) of the stopper mechanism (35) is switched to discharge the pressurized gas via the first stopper opening (53) at the side of the partition (44) of the stopper cylinder (42) and introduce the pressurized gas via the second opening (52) at the side of the connection material (51).

Thus, the pressurized gas presses and slides the stopper piston (47) from the side of the connection material (51) toward the side of the partition (44). This slide of the stopper piston (47) causes the stopper body (49) engage with the stopper gear (41).

This engagement halts the rotation of the stopper gear (41) and the rotation of the penetrating axis (16) to halt the movement of the rack and pinion mechanism (1), thereby halting the pair of the inwardly sliding finger bodies (27), (28). Therefore, as shown in Fig. 6 (b), the pair of the chucks (32), (33) of the finger bodies (27), (28) can form the standby open clearance slightly wider than the external diameter of the workpiece (67) to be gripped.

It should be noted that when the hand solenoid valve (54) is switched to activate the stopper mechanism (35), the hand solenoid valve (34) of the rack and pinion mechanism (1) is simultaneously switched to the pressure center. By switching the hand solenoid valve (34) to the pressure center, the pressurized gas is introduced from both the first opening (14) and the second opening (15) of the hand cylinder (2), so that the pressurized gas exists on both sides of the hand pistons (8), (10).

Thus, when the hand solenoid valve (34) is subsequently switched, the pressurized gas enables the hand pistons (8), (10) to slide slowly. That is, when the hand solenoid valve (34) is switched, the hand pistons (8), (10) do not slide rapidly, and thus, the hand pistons (8), (10) and the sealing walls (4), (5) are prevented from being damaged by the collision of the hand pistons (8), (10) with the sealing walls (4), (5).

The robot hand moves in a direction of the targeted work piece (67) with the pair of the finger bodies (27), (28) halted and forming the standby open clearance slightly wider than the external diameter of the workpiece (67) as described above. Then, as described in Fig. 6(c), the chucks (32), (33) of the finger bodies (27), (28) are placed in clearances between the targeted workpiece (67) and the workpieces (67) adjacent to both sides of the targeted workpiece (67) so that the targeted workpiece (67) is positioned between the chucks (32), (33).

At this moment, the finger bodies (27), (28) can be prevented from coming in contact with the workpieces (67) adjacent to both sides of the targeted workpiece (67) because the standby open clearance of the pair of finger bodies (27), (28) is set narrower than the maximum open position and slightly wider than the external diameter of the targeted workpiece. Thus, the targeted work piece (67) can be easily positioned between the chucks (32), (33). Further, it does not take much time for the finger bodies (27), (28) to move to come in contact with both sides of the workpiece (67) and grip the workpiece (67) because the clearance is narrow between the chucks (32), (33) and the workpiece (67), and thus the workability is improved.

Subsequently, the stopper solenoid valve (54) is switched to release the engagement between the stopper body (49) and the stopper gear (41) of the stopper mechanism (35), and the hand solenoid valve (34) is switched from the pressure center back to normal condition. Accordingly, the rack and pinion mechanism (1) is activated, and the pair of the finger bodies (27), (28) slides further inwardly from the position forming the standby open clearance.

Then, as shown in Fig. 6(d), the chucks (32), (33) of the finger bodies (27), (28) come in contact with the targeted workpiece (67). In this way, the chucks (32), (33) try to continue to slide further inwardly after coming in contact with both sides of the targeted workpiece (67), that is, the sliding force is applied to both sides of the workpiece (67) via the chucks (32), (33). Thus, the chucks (32), (33) can apply a sandwiching force to the workpiece (67), and can grip the workpiece (67).

In this way, the chucks (32), (33) of the finger bodies (27), (28) grip the targeted workpiece (67). Then, as shown in Fig. 6(e), the robot hand is pulled upward, so that the targeted workpiece (67) can be moved to a destination. Then, after the targeted workpiece (67) is moved to the destination, the hand solenoid valve (34) is switched to move the pair of the finger bodies (27), (28) in directions away from each other.

To slide the pair of the finger bodies (27), (28) in directions away from each other, the hand solenoid valve (34) is first switched to discharge the pressurized gas via the first opening (15), via which the pressurized gas is introduced into the hand cylinder (2) when the finger bodies (27), (28) slide inwardly, and introduce the pressurized gas via the second opening (14) opposite to the first opening (15).

Accordingly, the pair of the hand pistons (8), (10) slide in the opposite direction to cause the penetrating axis (16) to rotate in the opposite direction. Thus, the driven pinion gear rotates in the opposite direction to cause the pair of the finger bodies (27), (28) arranged with the driven rack gears (30), (31) to move in directions away from each other. The movement of the finger bodies (27), (28) in directions away from each other releases the workpiece sandwiched by the chucks (32), (33), and thus, the transfer of the targeted workpiece (67) finishes.

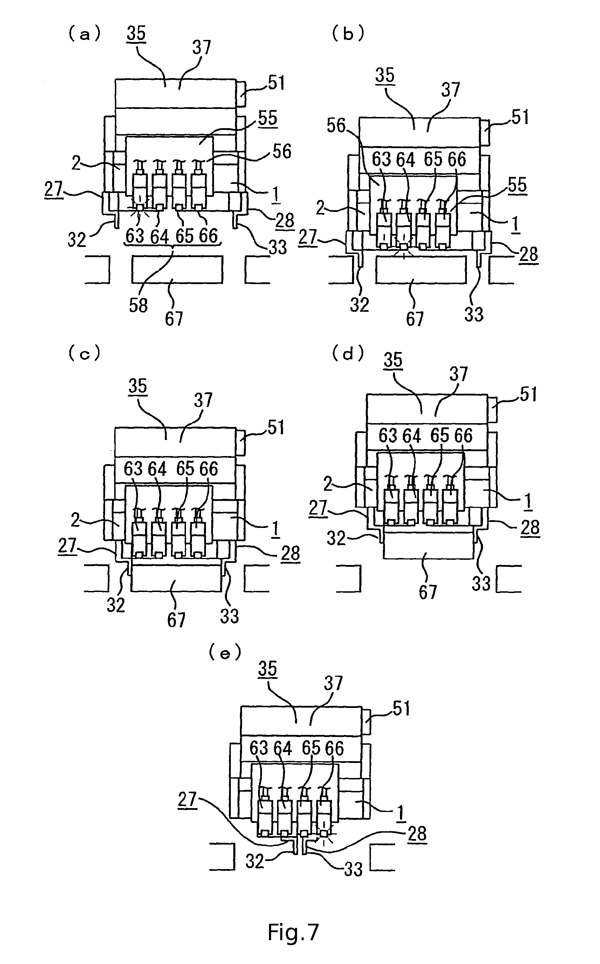

If the finger bodies (27), (28) fail to grip the workpiece (67), the pair of the finger bodies (27), (28) slide inwardly to the closed end position near the center in the widthwise direction of the hand cylinder (2) as shown in Fig 7(e), and the fourth sensor (66) detects the position of the finger bodies (27), (28) to halt operation of the rack and pinion mechanism (1).

In another case, where the finger bodies (27), (28) are to grip another workpiece (67) whose external diameter is larger than that of the above-described workpiece (67), the computer switches the ready-for-detection sensor from the second sensor (64) to the first sensor (63). Accordingly, the detection lamp (60) of the first sensor (63) illuminates as shown in Fig. 7(a)(b), and the finger bodies (27), (28) form the standby open clearance at the maximum open position.

Thus, the finger bodies (27), (28) form the standby open clearance at the open position more outward than the position forming the standby open clearance when the second sensor (64) is activated, thus capable of forming the standby open clearance wider than that when the second sensor (64) is activated. Therefore, as shown in Fig. 7(c) (d), the workpiece (67) having a larger external diameter can be gripped.

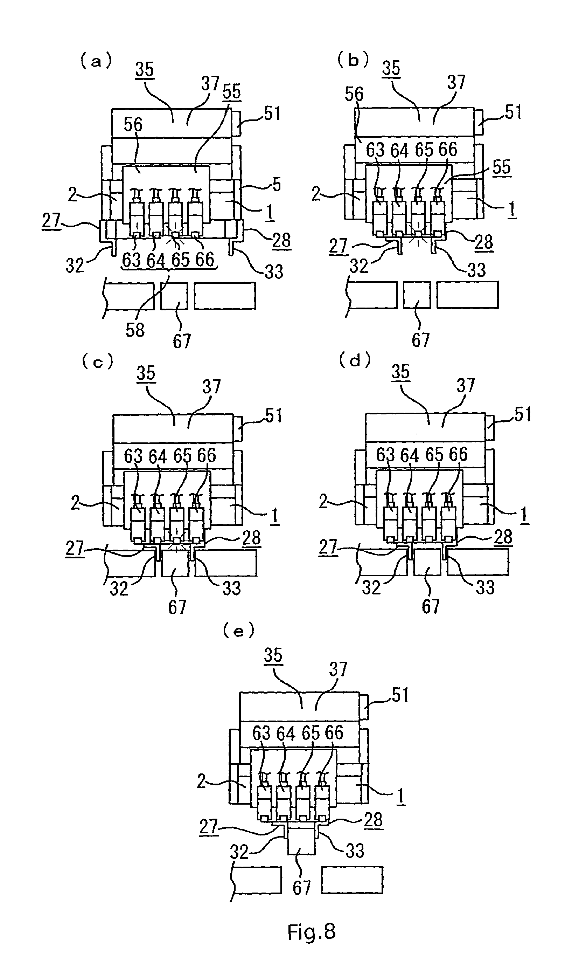

In further another case, where the finger bodies (27), (28) are to grip another workpiece (67) whose external diameter is smaller than that of the workpiece (67) to be gripped with the second sensor (64) activated, the computer switches the ready-for-detection sensor to the third sensor (65). Accordingly, the detection lamp (60) of the third sensor (65) illuminates as shown in Fig. 8(a)(b), and the finger bodies (27), (28) form the standby open clearance at the position of the third sensor (65) more inward than the position of the second sensor (64). Therefore, the finger bodies (27), (28) can form the standby open clearance narrower than that when the second sensor (64) is activated.

Therefore, as shown in Fig. 8 (c) to (e), the workpiece (67) having a smaller external diameter can be gripped without being interfered by other workpieces (67). As described above, the robot hand of the present invention can easily and rapidly change the standby open clearance with only one pair of the finger bodies (27), (28) only by operation of the computer to switch the ready-for-detection sensor without replacing the finger bodies (27), (28) of the robot hand. Therefore, unlike the robot hand disclosed in Patent Reference 1, the robot hand of the present invention does not require troublesome adjustment of the standby open clearance every time gripping the workpiece of another size, and can rapidly consecutively form the standby open clearance appropriate for each of multiple workpieces (67) in various external diameters, thus improving the workability when consecutively or randomly transporting multiple workpieces (67) in various external diameters.

## Claims

1. A robot hand for an industrial robot, the robot hand comprising:
a rack and pinion mechanism enabling a pair of finger bodies to slide in an axial direction of a hand cylinder, the rack and pinion mechanism comprising:
a pair of hand pistons connected with each other by a connection rod, the pair of hand pistons being slidably inserted in the hand cylinder,
Openings for a pressurized gas, the openings being arranged on the outside of the hand cylinder at both axially end portions of the pair of the hand pistons,
a driving rack gear formed on the connection rod,
a rotatable penetrating axis engaging a driving pinion gear thereof with the driving rack gear, the penetrating axis arranged in the hand cylinder to penetrate the hand cylinder, both ends of the penetrating axis protruding from the hand cylinder,
a driven pinion gear formed on the external periphery of the lower end of the penetrating axis,
a pair of driven rack gears engaging with the driven pinion gear, and
the pair of finger bodies respectively having the pair of driven rack gears;
a stopper mechanism capable of engaging with the penetrating axis protruding upward from the hand cylinder of the rack and pinion mechanism, the stopper mechanism controlling a position at which the pair of finger bodies stop; and
a sensor mechanism having multiple sensors spaced apart prescribed intervals, the multiple sensors facing an inner portion of a widthwise moving direction of the finger bodies of the rack and pinion mechanism to be able to detect a position of one of the finger bodies,
wherein the robot hand can grip a workpiece according to steps comprising:
rendering one of the multiple sensors of the sensor mechanism in a state ready for detection, the one of the multiple sensors being capable of determining that a clearance between the pair of the finger bodies is narrower than a maximum open clearance of the pair of the finger bodies and wider than an external diameter of the workpiece to be gripped;
inwardly sliding the finger bodies with the one of the multiple sensors being in the state ready for detection;
detecting the finger bodies with the one of the multiple sensors ready for detection where the finger bodies come close to the one of the multiple sensors;
upon detection of the finger bodies, activating a control device of the stopper mechanism to stop the pair of the finger bodies, thereby forming a standby open clearance between the pair of the finger bodies; and
with the workpiece to be gripped being positioned between the standby open clearance of the finger bodies, releasing the stopper mechanism to release the stopped finger bodies, thereby having the finger bodies slide inwardly to narrow the standby open clearance to grip the workpiece.

2. The robot hand for an industrial robot according to claim 1, wherein the stopper mechanism has a stopper gear secured to the upper end of the penetrating axis of the rack and pinion mechanism and a stopper body arranged reciprocally movably facing the stopper gear to be able to engage with the stopper gear,
and wherein the reciprocal movement of the stopper body can be controlled by a detection signal of one of the multiple sensors.

3. The robot hand for an industrial robot according to claim 1, wherein one of the multiple sensors is previously rendered in the state ready for detection depending on the workpiece to be gripped.

4. The robot hand for an industrial robot according to claim 1, wherein the multiple sensors are detachably and movably secured to an elongated hole formed, parallel to the moving direction of the finger bodies, on a sensor plate arranged on the hand cylinder.
